# EUROPEAN PATENT SPECIFICATION

(11) **EP 1 310 352 B1**
(45) Date of publication and mention of the grant of the patent: **18.01.2006**
(21) Application number: 01309513.8
(22) Date of filing: 12.11.2001
(51) Int. Cl.: B29D 31/512, A43B 9/12, A43B 3/12

(54) **Method for making a shoe**
Verfahren zur Herstellung eines Schuhs
Procédé pour la fabrication d'une chaussure

(43) Date of publication of application: 14.05.2003
(73) Proprietor: Chi, Cheng-Hsian, Taichung City (TW)
(72) Inventor: Chi, Cheng-Hsian, Taichung City (TW)
(74) Representative: Alexander, Thomas Bruce

(56) References cited:
- EP-A- 1 075 801
- EP-A- 1 136 244
- FR-A- 1 241 446

## Description

The invention relates to a method for making a shoe, more particularly to a method for making a shoe in which an insole blank of the shoe can be assembled with an outsole and an upper of the shoe by directly thermal-molding without preheating of the insole blank.

U. S. Patent No. 4,960,374 relates to an apparatus for molding outer and inner soles and a sole welt onto shoe uppers. A molded outer sole is formed by injection molding plasticized thermoplastic material into a first mold cavity. A molded sole welt is formed on a last supported shoe upper by injection molding plasticized thermoplastic material into a sole welt mold cavity. A molded inner sole is formed by injection molding foamed plasticized thermoplastic material into an inner sole mold cavity. However, the injection molding technique involves a complicated mold venting system, and is susceptible to problems relating to the molding pressure applied to the mold, and the molding temperature.

U.S. Patent No. 5,560,877 discloses a process for manufacturing an ethylene vinyl acetate (EVA) sole that involves weighing molding compounds for manufacturing the sole. The molded compounds are mixed, and extruded by means of a twin screw extruder so as to form a web of unfoamed extruded output. The web is cut into sheets. At least one of the sheets is placed into a first mold unit, which is heated and pressurized so as to form a rough foamed sole. The rough foamed sole is placed into a second mold unit, which is heated, pressurized, and cooled so as to form an embossed sole with a predeterminated pattern. As two different mold units are required to make the embossed sole, and since it is necessary to further adhere the embossed sole to an upper and an outsole of a shoe, this process is complicated and troublesome.

U.S. Patent No. 4,266,314 discloses a method for manufacturing sports shoes. At least two overlapping portions of plastic material are overmolded successively on a lining formed by a slipper so as to cover the slipper sole and upper at least to a partial extent. The method includes the steps of: overmolding a plastic layer which covers the entire upper of the slipper, overmolding a plastic stiffening reinforcement having greater rigidity than the previous layer and constituting a shell around the rear counter as well as a thin intermediate sole, and adding an outer wearing sole of molded plastic material to the outer surface of the thin intermediate sole.

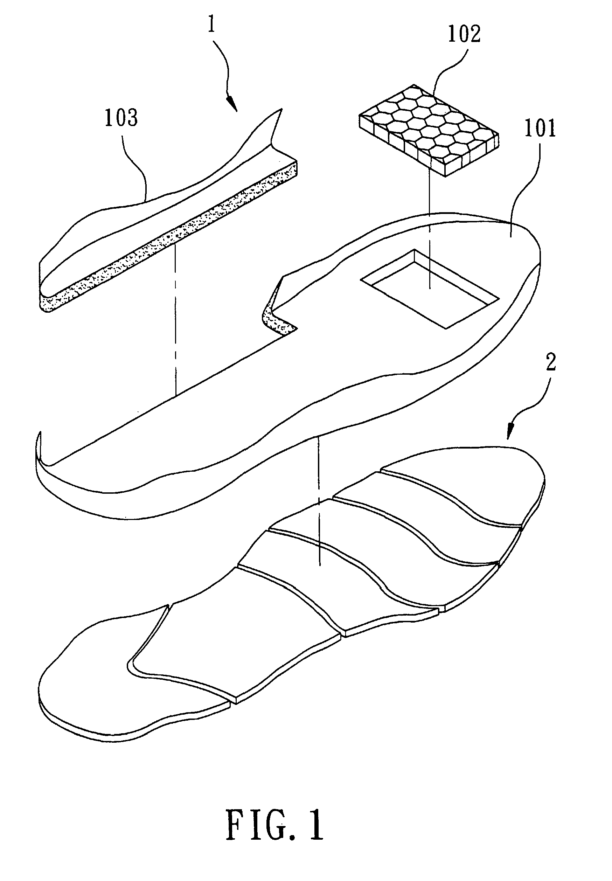

Figure 1 illustrates a conventional method for preparing a sole with diverse colors and materials, which includes the steps of: arranging a plurality of blocks 101, 102, 103 with predetermined shapes and colors to form an insole blank 1, disposing the insole blank 1 and an outsole 2 into a mold, and then thermally pressing the mold to obtain the sole. However, it will be difficult to place the blocks 101, 102, 103 into the mold for thermal molding if they are preheated to a high temperature.

EP-A-1136244 discloses a method which involves inserting a heated insole blank into the mold.

Therefore, the object of the present invention is to provide a method for making a shoe integrally, in which an insole blank of the shoe is disposed into a mold together with an outsole and an upper of the shoe at ambient temperature, and is then assembled integrally into a shoe by thermal molding.

Accordingly, the method for making a shoe includes the steps of: preparing an outsole; preparing a foamed insole blank that has a peripheral edge and that is to be disposed over the outsole; preparing an upper that has a bottom which is to be disposed over the insole blank and which has a geometric dimension smaller than that of the peripheral edge of the insole blank, and a peripheral bottom edge which extends upwardly from a periphery of the bottom of the upper; preparing a mold that defines a mold cavity, and that has an upper mold part with a last which is formed with an upper heating passage, a bottom mold part opposite to the upper mold part and formed with a bottom heating passage, and two opposite side mold parts formed with a side heating passage; applying an adhesive layer to the outsole and the peripheral bottom edge of the upper; placing the outsole, the insole blank and the upper in the mold cavity at ambient temperature such that the outsole is mounted on the bottom mold part, such that the upper is fittingly sleeved on the last, and such that the insole blank is sandwiched between the adhesive layer on the outsole and the bottom of the upper, with the peripheral edge of the insole blank being sandwiched between the side mold parts and the adhesive layer on the peripheral bottom edge of the upper; closing the mold; thermally molding assembly of the outsole, the insole blank, and the upper by passing a heating medium through the upper, bottom and side heating passages; and cooling the mold by passing a cooling medium through the upper, bottom and side heating passages after molding.

Other features and advantages of the present invention will become apparent in the following detailed description of the preferred embodiments with reference to the accompanying drawings, of which:
Figure 1 is an exploded perspective view of a conventional sole component;
Figures 2 and 3 illustrate how a shoe is made by the method according to this invention;
Figure 4 is a fragmentary schematic view illustrating an inflatable member which can be optionally placed between the insole blank and the bottom of the upper in the mold;
Figures 5 and 6 illustrate how a shoe with a cover strip is made by the method according to this invention;
Figure 7 illustrates how a sandal is made according to the method of this invention;
Figures 8 to 11 illustrate another way of making a sandal according to the method of this invention;
Figure 12 is an exploded perspective view illustrating the configuration of another mold useful in the method of this invention; and
Figure 13 a schematic view illustrating the mold of Figure 12 in a state of thermal pressing.

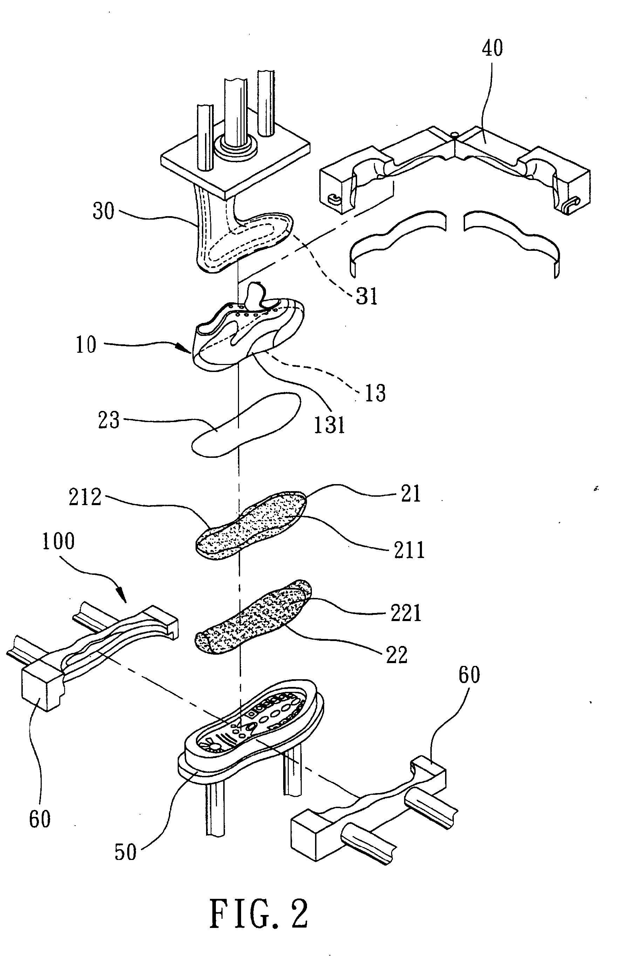

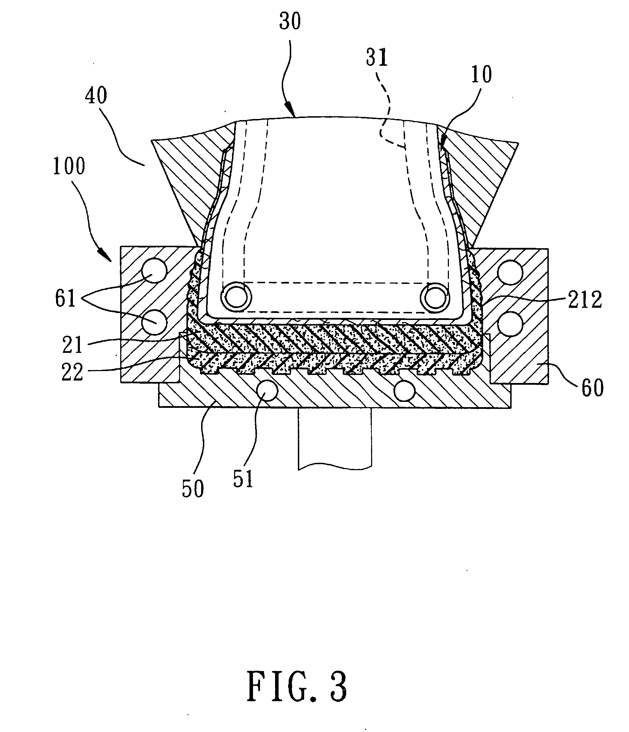

Referring to Figures 2 and 3, the preferred embodiment of the process for making a shoe according to this invention comprises the steps of:
(1) Preparing an outsole 22:
   The outsole 22 is formed in advance.
(2) Preparing a foamed insole blank 21:
   The foamed insole blank 21 is formed of ethylene vinyl acetate (EVA) copolymer, and has a top surface 211 and a peripheral edge 212 extending upward from a periphery of the top surface 211. The foamed insole blank 21 is to be disposed over the outsole 22.
(3) Preparing an upper 10:
   The upper 10 has a bottom 13 which is to be disposed over the insole blank 21 and which has a geometric dimension smaller than that of the peripheral edge 212 of the insole blank 21, and a peripheral bottom edge 131 which extends upwardly from a periphery of the bottom 13 of the upper 10.
(4) Preparing a mold 100:
   The mold 100 defines a mold cavity, and has an upper mold part 40 with a last 30 which is formed with an upper heating passage 31, a bottom mold part 50 opposite to the upper mold part 40 and formed with a bottom heating passage 51, and two opposite side mold parts 60 each of which is formed with a side heating passage 61.
(5) Applying an adhesive layer to the outsole 22 and the peripheral bottom edge 131 of the upper 10:
   The top surface 221 of the outsole 22 and the peripheral bottom edge 131 of the upper 10 are applied with an adhesive layer. Additionally, a thermal-setting adhesive film 23 is placed between the insole blank 21 and the bottom 13 of the upper 10. The peripheral edge 212 of the insole blank 21 is to be adhered to the peripheral bottom edge 131 of the upper 10.
(6) Placing the outsole 22, the adhesive film 23, the insole blank 21, and the upper 10 in the mold cavity at the ambient temperature:
   The outsole 22, the insole blank 21 and the upper 10 are placed in the mold cavity at the ambient temperature such that the outsole 22 is mounted on the bottom mold part 50, such that the upper 10 is fittingly sleeved on the last 30, and such that the insole blank 21 is sandwiched between the adhesive film 23 on the outsole 22 and the bottom 13 of the upper 10, with the peripheral edge 212 of the insole blank 21 being sandwiched between the side mold parts 60 and the adhesive layer on the peripheral bottom edge 131 of the upper 10.
(7) Closing the mold 100.
(8) Thermally molding assembly of the outsole 22, the insole blank 21, and the upper 10:
   Thermal molding of the assembly of the outsole 22, the insole blank 21, and the upper 10 is carried out by passing a heating medium through the upper, bottom and side heating passages 31, 51, 61. The heating medium that passes through the bottom and side heating passages 51, 61 is provided by a heating device (not shown) . Heat is transmitted from the bottom mold part 50 and the side mold parts 60 to the insole blank 21 and the outsole 22 so as to adhere the insole blank 21 to the outsole 22. Simultaneously, the heat created by the heating medium passing through the upper heating passages 31 is transmitted to the thermal-setting adhesive film 23 through the bottom 13 of the upper 10 so as to melt the thermal-setting adhesive film 23 and to adhere the upper 10 to the insole blank 21. Therefore, the upper 10, the insole blank 21 and the outsole 22 are assembled integrally by thermal molding. Preferably, the molding time ranges from 1 to 7 minutes, and the molding temperature ranges from 100 to 150 °C.
(9) Cooling the mold 100:
   After molding, the supply of the heating medium is terminated, and the mold 100 is subsequently cooled by passing a cooling medium through the upper, bottom and side heating passages 31, 51, 61.
(10) Opening the mold 100:
   The mold 100 is opened after the cooling process. The shoe thus produced is trimmed to obtain a final shoe product. The upper, bottom and side heating passages 31, 51, 61 are preheated once again by supplying the heating medium from the heating device for the next processing.

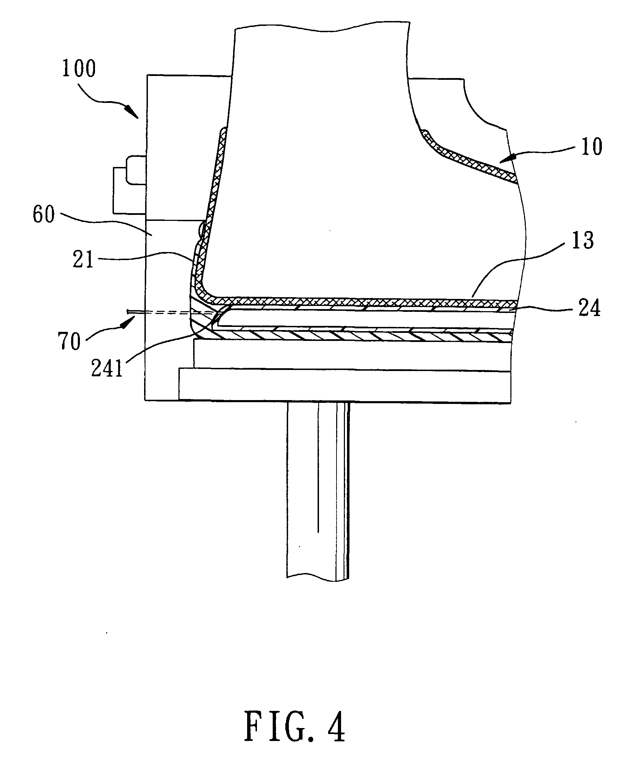

Referring to Figure 4, an inflatable member 24 is optionally placed between the insole blank 21 and the bottom 13 of the upper 10 in the mold 100 before molding. The inflatable member 24 is provided with a hole 241 for inserting a gas providing unit 70 therein. Hot gas can be transported into the inflatable member 24 through the gas providing unit 70 to heat the insole blank 21 indirectly and to expand the insole blank 21 against the side mold parts 60.

Alternatively, as shown in Figure 4, the upper 10 and the insole blank 21 can be first assembled by thermal molding according to the method of this invention. The assembly thus formed is then adhered to the outsole 22 so as to enhance the wearing-resistant effect.

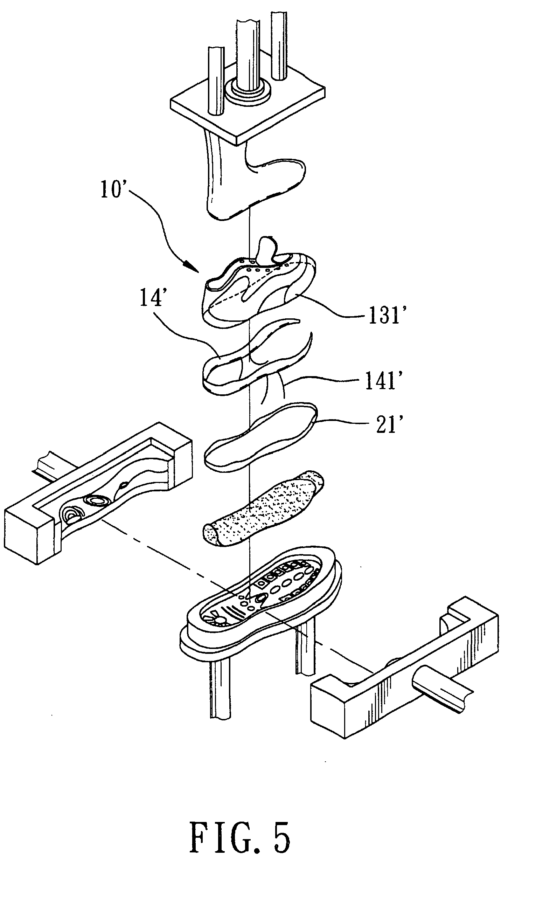

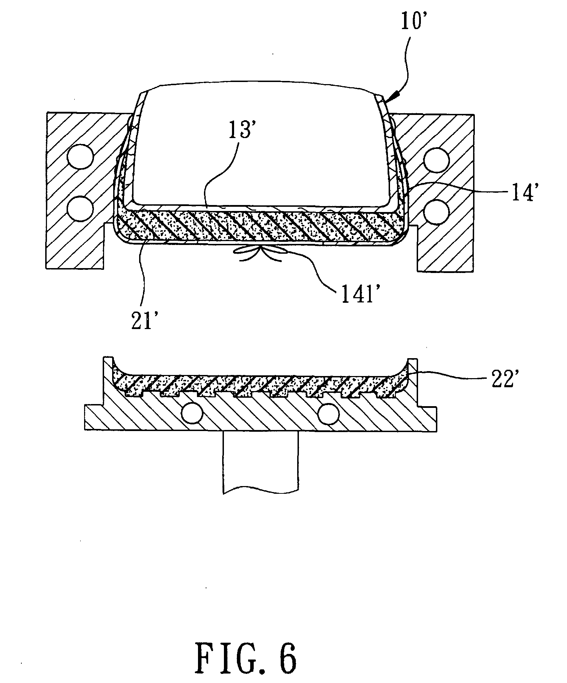

Figures 5 and 6 illustrate how a shoe with a cover strip is made by the method according to this invention. The shoe is similar to that shown in Figures 2 and 3, except that a cover strip 14' is attached to the peripheral edge 131' of the upper 10' by stitching or adhering. The cover strip 14' can be made of a material, such as PVC, EVA, PU, plastic or leather. Additionally, tying threads 141' are provided along the peripheral edge of the cover strip 14' for tying the upper 10' and the insole blank 21' together before molding.

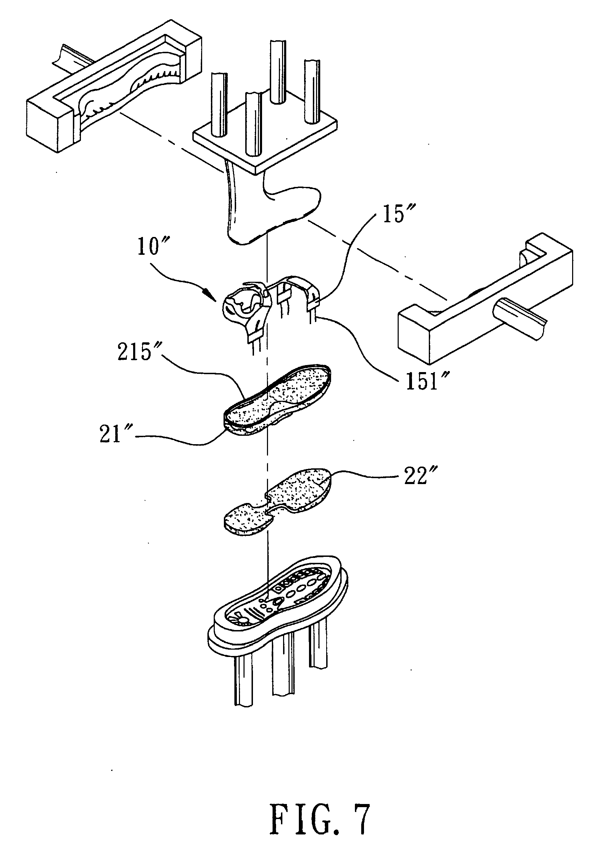

Figure 7 illustrates how a sandal is made according to the method of this invention. The sandal includes an outsole 22", an insole blank 21" disposed over the outsole 22", and a strap unit 10" having four end portions 15". Each of the end portions 15" of the strap unit 10" first passes through a corresponding one of slits 215" formed in the insole blank 21", and is then connected to the outsole 22" by stitching or by tying threads 151" provided at each of the end portions 15" of the strap unit 10". The molds are subsequently closed, and the thermal molding process as described hereinabove is carried out to make the sandal.

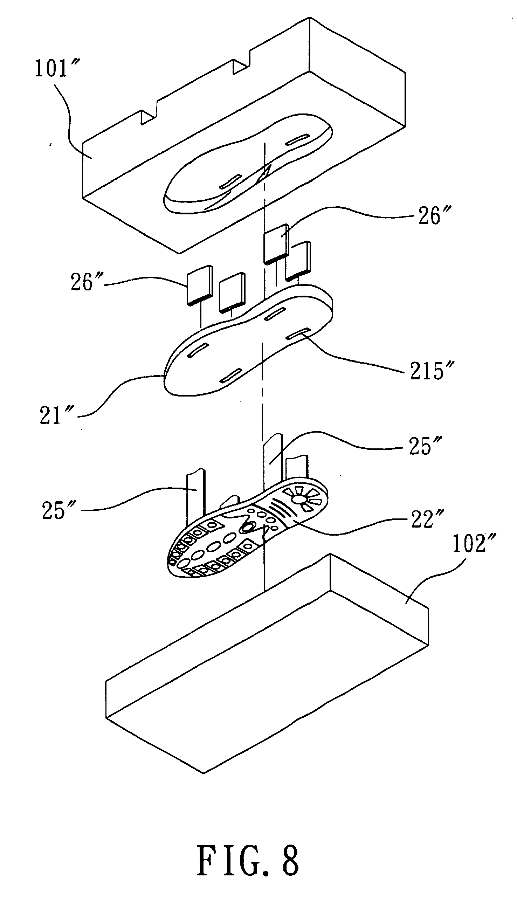

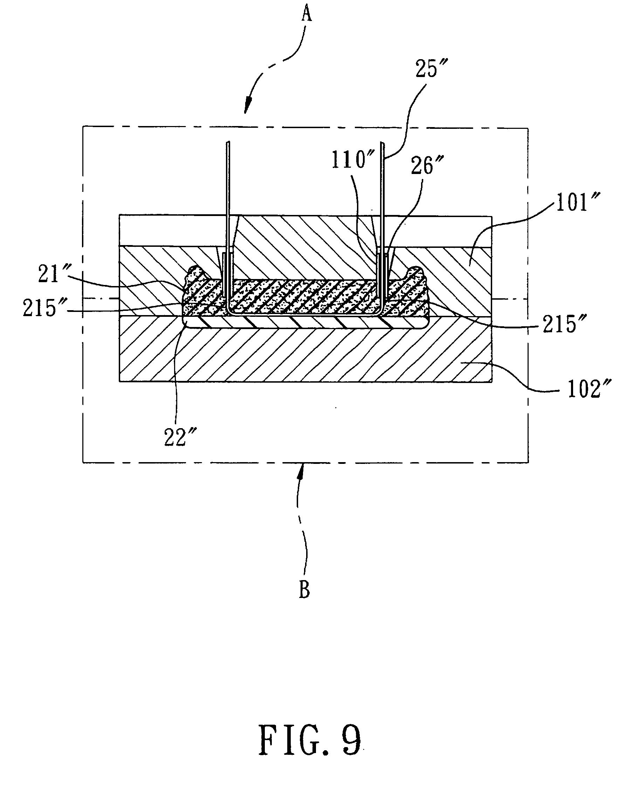

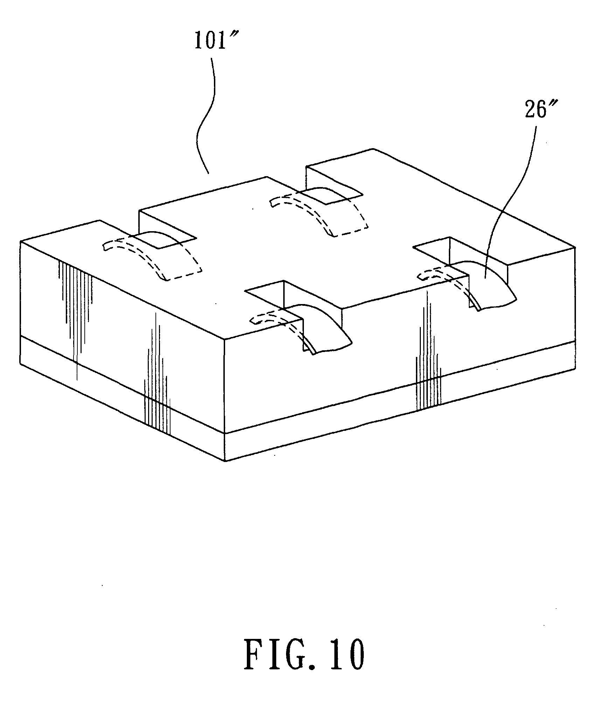

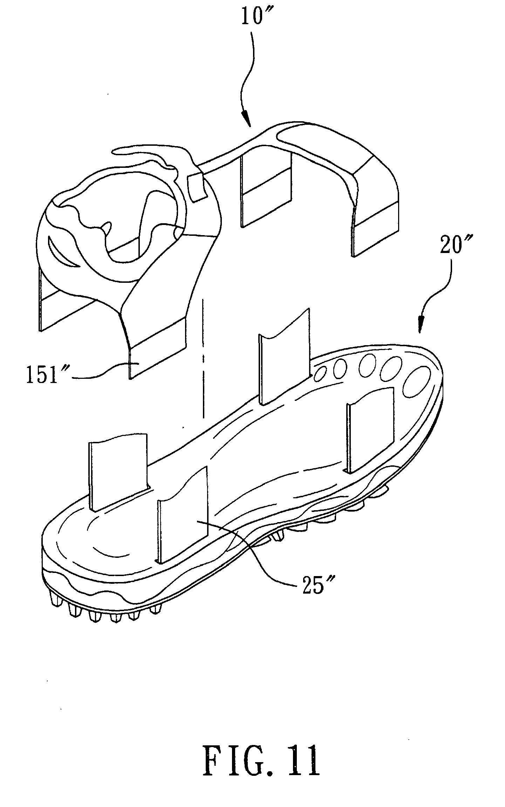

Referring to Figures 8 to 11, which illustrate another way of making a sandal according to the method of this invention, the outsole 22" is provided with a pair of linking straps 25". The insole blank 21" is formed with four slits 215" for passage of end portions of the linking straps 25". Four positioning sleeves 26" are disposed such that the four positioning sleeves 26" extend through the upper mold part 101" and respectively into the slits 215", and such that the end portions of the linking straps 25" extend through the positioning sleeves 26" and the upper mold part 101" . The positioning sleeves 26" are made of a material which is flexible and resistant to high temperature. The insole blank 21" and the outsole 22" are respectively mounted into the upper mold part 101" and the bottom mold part 102". Referring to Figure 10, portions of the positioning sleeves 26" that are exposed from the upper mold part 101" are bent in order to be anchored on the upper mold part 101". The upper mold part 101" and the bottom mold part 102" are then closed, and thermal molding is proceeded after enclosing the upper and bottom mold parts 101" , 102" with complementary upper and lower heating devices (A, B), as shown in Figure 9. After molding, the positioning sleeves 26" can be removed, and the end portions of the linking straps 25" can be stitched onto the end portions 151" of the strap unit 10" to thereby form a sandal product.

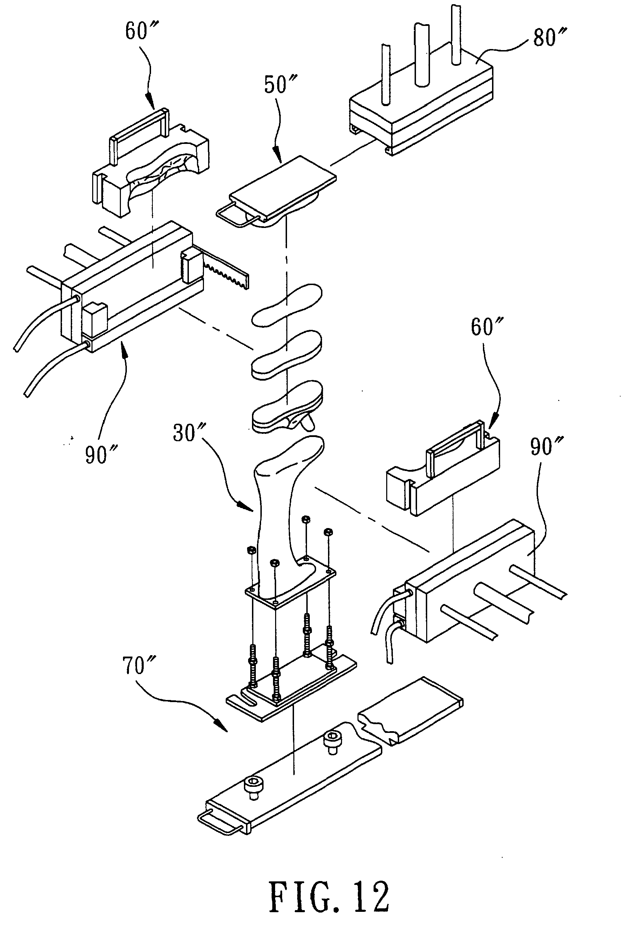

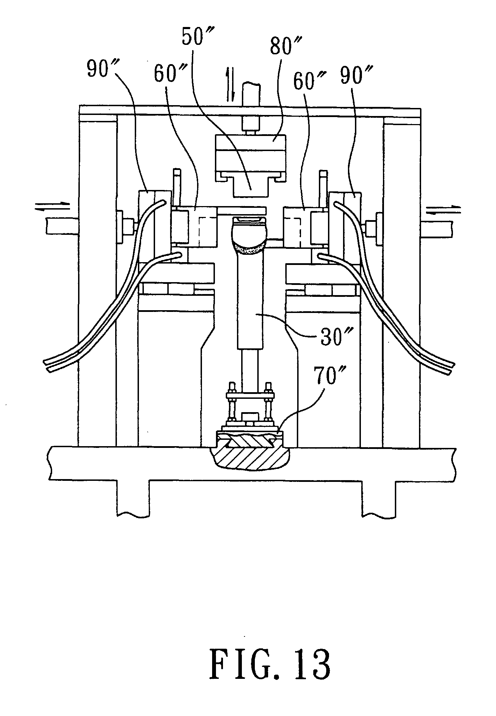

Referring to Figures 12 and 13, which illustrate the configuration of another mold useful in the method of this invention, the last 30", the bottom mold part 50" and two opposite side mold parts 60" of the mold are changeably mounted on the top, bottom and side slidable seats 70", 80", 90", which are provided with heating passages, respectively. The top, bottom and side slidable seats 70", 80, 90" can be opened or closed, as required, during the operation. The last 30", the bottom mold part 50" and the opposite side mold parts 60" are preheated to a predetermined elevated temperature, and are then mounted on the top, bottom and side slidable seats 70" , 80" , 90", respectively. The top, bottom and side slidable seats 70", 80", 90" are combined into a structural state shown in Figure 13 pneumatically. The mold is subsequently closed, and the thermal molding process as described hereinabove is carried out to make the shoe.

In the present invention, since the insole blank 21, 21', 21" is placed into the mold at ambient temperature, the aforesaid drawbacks as encountered in the prior art can be eliminated.

## Claims

1. A method for making a shoe, comprising the steps of:
preparing an outsole (22, 22', 22");
preparing a foamed insole blank (21, 21', 21") that has a peripheral edge (212) and that is to be disposed over said outsole (22, 22', 22");
preparing an upper (10, 10') that has a bottom (13) which is to be disposed over said insole blank (21, 21', 21") and which has a geometric dimension smaller than that of said peripheral edge (212) of said insole blank (21, 21' , 21"), and a peripheral bottom edge (131, 131') which extends upwardly from a periphery of said bottom (13) of said upper (10, 10');
preparing a mold (100) that defines a mold cavity, and that has an upper mold part (40, 101") with a last (30, 30") which is formed with an upper heating passage (31), a bottom mold part (50, 102", 50") opposite to said upper mold part (40, 101") and formed with a bottom heating passage (51), and two opposite side mold parts (60, 60") each of which is formed with a side heating passage (61);
applying an adhesive layer to said outsole (22, 22', 22") and said peripheral bottom edge (131, 131') of said upper (10, 10');
placing said outsole (22, 22', 22"), said insole blank (21, 21', 21") and said upper (10, 10') in said mold cavity at ambient temperature such that said outsole (22, 22', 22") is mounted on said bottom mold part (50, 102", 50"), such that said upper (10, 10') is fittingly sleeved on said last (30, 30"), and such that said insole blank (21, 21', 22") is sandwiched between said adhesive layer (23) on said outsole (22, 22', 22") and said bottom (13) of said upper (10, 10'), with said peripheral edge (212) of said insole blank (21, 21', 21") being sandwiched between said side mold parts (60, 60") and said adhesive layer on said peripheral bottom edge (131, 131') of said upper (10, 10');
closing said mold (100);
thermally molding assembly of said outsole (22, 22', 22"), said insole blank (21, 21', 21"), and said upper (10, 10') by passing a heating medium through said upper, bottom and side heating passages (31, 51, 61) ; and
cooling said mold (100) by passing a cooling medium through said upper, bottom and side heating passages (31, 51, 61) after molding.

2. The method of Claim 1, further **characterized by** placing an inflatable member (24) between said insole blank (21) and said bottom (13) of said upper (10) in said mold (100) before molding, and inflating said inflatable member (24) so as to expand said insole blank (21) against said side mold parts (60).

3. The method of Claim 1, further **characterized by** placing a thermal-setting adhesive (23) between said insole blank (21) and said bottom (13) of said upper (10) in said mold (100) before molding.

## Revendications

1. Procédé pour fabriquer une chaussure, comprenant les étapes consistant à :
préparer une semelle d'usure (22, 22', 22") ;
préparer une ébauche de semelle première en mousse (21, 21', 21") qui comporte un bord périphérique (212) et qui doit être disposée sur ladite semelle d'usure (22, 22', 22");
préparer une tige (10, 10') qui a une surface inférieure (13) qui doit être disposée sur ladite ébauche de semelle première (21, 21', 21") et qui a une dimension géométrique inférieure à celle dudit bord périphérique (212) de ladite ébauche de semelle première (21, 21', 21"), et un bord inférieur périphérique (131, 131') qui s'étend vers le haut depuis une périphérie de ladite surface inférieure (13) de ladite tige (10, 10') ;
préparer un moule (100) qui définit une cavité de moule, et qui comporte une partie de moule supérieure (40, 101") avec une forme à chaussure (30, 30") qui est pourvue d'un passage de chauffage supérieur (31), une partie de moule inférieure (50, 102", 50") à l'opposé de ladite partie de moule supérieure (40, 101") et pourvue d'un passage de chauffage inférieur (51), et deux parties de moule latérales opposées (60, 60") étant chacune pourvue d'un passage de chauffage latéral (61) ;
appliquer une couche adhésive sur ladite semelle d'usure (22, 22', 22") et ledit bord inférieur périphérique (131, 131') de ladite tige (10, 10') ;
placer ladite semelle d'usure (22, 22', 22"), ladite ébauche de semelle première (21, 21', 21") et ladite tige (10, 10') dans ladite cavité de moule à température ambiante de manière que ladite semelle d'usure (22, 22', 22") soit montée sur ladite partie de moule inférieure (50, 102", 50"), de manière que ladite tige (10, 10') soit enfilée ajustée sur ladite forme à chaussure (30, 30"), et de manière que ladite ébauche de semelle première (21, 21', 21") soit prise en sandwich entre ladite couche adhésive (23) sur ladite semelle d'usure (22, 22', 22") et ladite surface inférieure (13) de ladite tige (10, 10'), ledit bord périphérique (212) de ladite ébauche de semelle première (21, 21', 21") étant pris en sandwich entre lesdites parties de moule latérales (60, 60") et ladite couche adhésive sur ledit bord inférieur périphérique (131, 131') de ladite tige (10, 10') ;
fermer ledit moule (100) ;
mouler thermiquement l'ensemble constitué par ladite semelle d'usure (22, 22', 22"), ladite ébauche de semelle première (21, 21', 21"), et ladite tige (10, 10') en faisant passer un milieu chauffant via lesdits passages de chauffage supérieur, inférieur et latéraux (31, 51, 61) ; et
refroidir ledit moule (100) en faisant passer un milieu refroidissant via lesdits passages de chauffage supérieur, inférieur et latéraux (31, 51, 61) après moulage.

2. Procédé selon la revendication 1, **caractérisé en outre par** le placement d'un élément gonflable (24) entre ladite ébauche de semelle première (21) et ladite surface inférieure (13) de ladite tige (10) dans ledit moule (100) avant moulage, et le gonflage dudit élément gonflable (24) afin de dilater ladite ébauche de semelle première (21) contre lesdites parties de moule latérales (60).

3. Procédé selon la revendication 1, **caractérisé en outre par** le placement d'un adhésif thermodurcissable (23) entre ladite ébauche de semelle première (21) et ladite surface inférieure (13) de ladite tige (10) dans ledit moule (100) avant moulage.

## Patentansprüche

1. Verfahren zur Herstellung eines Schuhs, umfassend die folgenden Schritte:
Präparieren einer Außensohle (22, 22', 22");
Präparieren eines geschäumten Innensohlenrohlings (21, 21', 21"), welcher einen Umfangsrand (212) aufweist und welcher über der Außensohle (22, 22', 22") angeordnet werden soll;
Präparieren eines Obermaterials (10, 10'), welches eine Unterseite (13) aufweist, die über dem Innensohlenrohling (21, 21', 21") angeordnet werden soll und welche eine geometrische Abmessung aufweist, die kleiner ist als jene des Umfangsrandes (212) des Innensohlenrohlings (21, 21', 21"), und einen Umfangsunterseitenrand (131, 131') aufweist, welcher sich von einem Umfang der Unterseite (13) des Obermaterials (10, 10') ausgehend nach oben erstreckt;
Präparieren einer Form (100), welche einen Formhohlraum definiert und welche ein oberes Formteil (40, 101") mit einem Leisten (30, 30") aufweist, das mit einem oberen Heizkanal (31) ausgebildet ist, ein unteres Formteil (50, 102", 50") aufweist, welches dem oberen Formteil (40, 101") gegenüberliegt und mit einem unteren Heizkanal (51) ausgebildet ist, und zwei gegenüberliegende Seitenformteile (60, 60") aufweist, von welchen jedes mit einem Seitenheizkanal (61) ausgebildet ist;
Auftragen einer adhäsiven Lage auf die Außensohle (22, 22', 22") und den Umfangsunterseitenrand (131, 131') des Obermaterials (10, 10');
Platzieren der Außensohle (22, 22', 22"), des Innensohlenrohlings (21, 21', 21") und des Obermaterials (10, 10') in dem Formhohlraum bei Umgebungstemperatur, sodass die Außensohle (22, 22', 22") an dem unteren Formteil (50, 102", 50") angebracht ist, sodass das Obermaterial (10, 10') passend auf den Leisten (30, 30") aufgeschoben ist und sodass der Innensohlenrohling (21, 21', 21") sandwichartig zwischen der adhäsiven Lage (23) auf der Außensohle (22, 22', 22") und der Unterseite (13) des Obermaterials (10, 10') angeordnet ist, wobei der Umfangsrand (212) des Innensohlenrohlings (21, 21', 21") sandwichartig zwischen den Seitenformteilen (60, 60") und der adhäsiven Lage auf dem Umfangsunterseitenrand (131, 131') des Obermaterials (10, 10') angeordnet ist;
Schließen der Form (100);
thermisches Ausformen einer Baugruppe aus der Außensohle (22, 22', 22") dem Innensohlenrohling (21, 21', 21") und dem Obermaterial (10, 10') durch Durchleiten eines Heizmediums durch den oberen, den unteren und die Seitenheizkanäle (31, 51, 61); und
Kühlen der Form (100) durch Durchleiten eines Kühlmediums durch den oberen, den unteren und die Seitenheizkanäle (31, 51, 61) nach dem Ausformen.

2. Verfahren nach Anspruch 1, ferner **gekennzeichnet durch** Platzieren eines aufblasbaren Elements (24) zwischen dem Innensohlenrohling (21) und dem Unterteil (13) des Obermaterials (10) in der Form (100) vor dem Ausformen und **durch** Aufblasen des aufblasbaren Elements (24), um den Innensohlenrohling (21) gegen die Seitenformteile (60) auszudehnen.

3. Verfahren nach Anspruch 1, ferner **gekennzeichnet durch** Platzieren eines thermisch aushärtenden Haftmittels (23) zwischen dem Innensohlenrohling (21) und der Unterseite (13) des Obermaterials (10) in der Form (100) vor dem Ausformen.
